# EUROPEAN PATENT APPLICATION

(11) **EP 4 650 084 A1**
(43) Date of publication of application: **19.11.2025**
(21) Application number: 24176548.6
(22) Date of filing: 17.05.2024
(51) Int. Cl.: B22F 10/25, B22F 10/28, B33Y 70/00, C22C 33/02, C22C 38/00, C22C 38/02, C22C 38/04, C22C 38/44, C22C 38/46

(54) **STEEL POWDER FOR ADDITIVE MANUFACTURING PROCESSES**

(71) Applicant: SSAB Technology AB, 101 21 Stockholm (SE)
(72) Inventor: Fager, Ulrika, 613 80 Oxelösund (SE); Haglund, Teodor, 613 80 Oxelösund (SE); Borg, Alfred, 613 80 Oxelösund (SE)
(74) Representative: AWA Sweden AB

(57) **Abstract**

A steel powder for use in additive manufacturing processes, the steel powder having the following composition in percent by weight (wt.-%):
C
0.20 - 0.42,
Si
0.8 - 1.3,
Mn
0.5 - 1.5,
Cr
1.0-2.2,
Ni
0.8 - 2.0,
Mo
1.1-3.0,
V
0.08-0.30,

optionally Ti equal to or less than 0.05,
optionally Cu equal to or less than 0.5,
optionally Nb equal to or less than 0.06,
optionally N equal to or less than 0.05,
optionally B equal to or less than 0.005,
balance Fe and unavoidable impurities.

## Description

### TECHNICAL FIELD

The present disclosure relates in general to a steel powder suitable for use in additive manufacturing processes involving melting and fusing of the steel powder.

The present disclosure further relates in general to a method for producing a component through additive manufacturing using the steel powder, as well as a component produced through additive manufacturing using the steel powder.

### BACKGROUND

Additive manufacturing (AM), sometimes referred to as additive layer manufacturing (ALM), is a technology for producing three-dimensional objects, for example of metal, layer by layer. One of the main advantages of additive manufacturing is that it enables producing objects having a very complex design, which may be very difficult or even impossible to produce by other methods. Thus, additive manufacturing opens up new possibilities for producing objects which may have a better geometrical configuration for their intended use.

Additive manufacturing is a generic term encompassing various different processes. Some of these AM processes involve melting and fusing of a powder. One example of such AM processes is laser powder bed fusion (L-PBF), sometimes also referred to as selective laser melting (SLM). In L-PBF a thin powder layer is first applied on a building platform. This takes place inside a sealed chamber that contains inert gas, for example argon or nitrogen, with extremely low oxygen levels. A laser beam selectively melts the layer of powder. Then the platform is gradually lowered, and a new powder layer is applied. After that, the laser beam melting operation is repeated. The process is repeated until the desired component has been obtained and may be removed from the powder bed. Another example of an additive manufacturing process is electron beam melting (EBM), wherein an electron beam is used as the energy source instead of a laser. Like L-PBF, EBM involves selective melting of a powder layer followed by fusing it to a previously formed (printed) layer. The electron beam is typically guided by a magnetic field. Another example of an additive manufacturing process involving melting and fusing of the powder is directed energy deposition (DED). In contrast to L-PBF and EBM, DED involves melting of the feedstock, which may be either a powder or a wire, by a heat source followed by deposition of the feedstock in melted form onto a specified surface where it solidifies and thereby fuses with a previously formed layer. Examples of heat sources in DED include laser, electron beam or a gas-tungsten arc. This process is also typically performed in a sealed chamber with controlled atmosphere. A further example of an additive manufacturing process involving melting and fusing of a powder is laser metal deposition (LMD), which is a process that may typically be used for repair or coating of components. In LMD, a laser beam is directed onto a surface of a base material (e.g., an existing component) to selectively melt the base material and create a molten pool on the surface. A powder or wire is fed into said molten pool, and thereby melted and upon solidification fused to the base material.

Additive manufacturing is an emerging market, and much research is therefore focused on the development of powders that may be used in such processes. Since the metallurgy during additive manufacturing is very different from the metallurgy during conventional manufacturing methods, such as casting, due to the surface chemistry of the powder as well as the remelting occurring during formation of the layers, the composition of the powder must be adapted to allow good printability. This is one of the major difficulties when desiring to utilize additive manufacturing in the production of components which, in addition to a particular design, should be able to meet for example the mechanical requirements of a component intended for a certain application.

Examples of previously known steel powders that may be used in AM processes involving melting and fusing of the steel powder may be found in e.g., WO 2020/221812 A1 and EP4180225 A1.

### SUMMARY

The object of the present invention is to provide a steel powder suitable for additive manufacturing processes involving melting and fusing of the steel powder, and which results in a good balance between mechanical properties of the manufactured component after additive manufacturing.

The object is achieved by the subject-matter of the appended independent claim(s). Embodiments are defined by the dependent claims.

In accordance with the present disclosure, a steel powder for use in additive manufacturing processes involving melting and fusing of the steel powder is provided. The steel powder has the following composition in percent by weight (wt.-%):
- C: 0.20 - 0.42,
- Si: 0.8 - 1.3,
- Mn: 0.5 - 1.5,
- Cr: 1.0-2.2,
- Ni: 0.8 - 2.0,
- Mo: 1.1-3.0,
- V: 0.08-0.30,

optionally Ti equal to or less than 0.05,
optionally Cu equal to or less than 0.5,
optionally Nb equal to or less than 0.06,
optionally N equal to or less than 0.05,
optionally B equal to or less than 0.005,

balance Fe and unavoidable impurities;
wherein the unavoidable impurities Al, P, and S are limited to:
   - Al: equal to or less than 0.02,
   - P: equal to or less than 0.02, and
   - S: equal to or less than 0.01.

The herein described steel powder has a good flowability and printability making it suitable e.g., for use in additive manufacturing processes such as laser powder bed fusion (L-PBF), electron beam melting (EBM), laser metal deposition (LMD), and directed energy deposition (DED).

By means of the herein described steel powder, it is possible to obtain a microstructure comprising a substantially martensitic matrix comprising finely dispersed nano-sized carbides in a component produced by additive manufacturing already in the as-built condition.

The herein described steel powder enables obtaining a high hardness, and thereby also a high wear resistance, while still maintaining an acceptable impact toughness, after additive manufacturing. Furthermore, the herein described steel powder also enables obtaining an excellent tensile strength. Thus, the herein described steel powder is especially suitable for producing (or repairing) e.g., tools, general engineering components and automotive components intended for demanding applications.

More specifically, by means of the herein described steel powder, it is possible to obtain the following properties after additive manufacturing in the as-built condition:
- a yield strength of at least 1100 MPa as determined in accordance with ISO 6892-1:2019,
- a tensile strength of at least 1500 MPa as determined in accordance with ISO 6892-1:2019,
- an elongation of at least 10% as determined in accordance with ISO 6892-1:2019,
- an impact toughness of at least 30 J as determined in accordance with ISO 148-1:2016, and
- a hardness of at least 460 HV as determined in accordance with ISO 6507-1:2018.

The present disclosure also relates to a method for producing a component, said method comprising performing an additive manufacturing process using the steel powder as described herein. The additive manufacturing process may be an additive manufacturing process involving melting and fusing of the steel powder, such as laser bed powder bed fusion (L-PBF), electron beam melting (EBM), laser metal deposition (LMD), or directed energy deposition (DED). Alternatively, the additive manufacturing process may be selective laser sintering (SLS).

Moreover, the present disclosure relates to a steel component produced through additive manufacturing using the steel powder as described herein. The steel component has a tensile strength of at least 1500 MPa as determined in accordance with ISO 6892-1:2019. Furthermore, the steel component has a hardness of at least 460 HV, preferably at least 475 HV, as determined in accordance with ISO 6507-1:2018.

The present disclosure further relates to use of the herein described steel powder in an additive manufacturing process selected from the group consisting of laser powder bed fusion (L-PBF), electron beam melting (EBM), laser metal deposition (LMD), directed energy deposition (DED), and selective laser sintering (SLS). Preferably, the additive manufacturing process is laser powder bed fusion or laser metal deposition.

### DETAILED DESCRIPTION

The invention will be described in more detail below with reference to exemplifying embodiments as well as experimental results. The invention is, however, not limited to the exemplifying embodiments discussed or the experimental results but may be varied within the scope of the appended claims.

When ranges are disclosed in the present disclosure, such ranges include the end values of the range, unless explicitly disclosed otherwise. Similarly, if an open range is disclosed, the open range also includes the single end value of the open range, unless explicitly disclosed otherwise.

The present disclosure provides a steel powder, more specifically a tool and engineering steel powder, which is suitable for use in such additive manufacturing processes that involve melting and fusing of the steel powder. The steel powder is particularly useful for use in laser powder bed fusion processes or laser metal deposition processes, but could also advantageously be used in for example electron beam melting processes or in directed energy deposition processes. The steel powder has a composition which comprises, in percent by weight (wt.-%):
- C: 0.20 - 0.42,
- Si: 0.8 - 1.3,
- Mn: 0.5 - 1.5,
- Cr: 1.0-2.2,
- Ni: 0.8 - 2.0,
- Mo: 1.1-3.0,
- V: 0.08-0.30,

optionally Ti equal to or less than 0.05,
optionally Cu equal to or less than 0.5,
optionally Nb equal to or less than 0.06,
optionally N equal to or less than 0.05,
optionally B equal to or less than 0.005,

balance Fe and unavoidable impurities;
wherein the unavoidable impurities Al, P, and S are limited to:
   - Al: equal to or less than 0.02,
   - P: equal to or less than 0.02, and
   - S: equal to or less than 0.01.

It should here be noted that, although the herein described steel powder primarily has been developed for use in such additive manufacturing processes that involve melting and fusing of the steel powder, the steel powder may also be used in other additive manufacturing processes, such as selective laser sintering (SLS), if desired. Selective laser sintering is an additive manufacturing process which, like selective laser melting, involves selective heating of the powder present in a powder bed using a laser energy source, said heating leading to fusing of a steel powder layer of the powder bed to a previously formed consolidated layer. However, in contrast to selective laser melting, the powder is in selective laser sintering heated to a point just below the melting temperature of the steel powder.

The herein described steel powder may be used for producing a large variety of components, intended for a wide variety of applications, by means of the above-mentioned additive manufacturing processes. Examples of such components include various tools (for example dies or molds), general engineering components, and automotive components, but are not limited thereto. The steel powder may also be used for repair of such components.

In the following, the importance of the different alloying elements of the steel powder will be briefly discussed. All percentages for the chemical composition are given in weight-% (wt.-%), unless explicitly disclosed otherwise. The various upper and lower limits of the individual elements of the composition, as described below, can be freely combined within the broadest limits set out in the independent claim(s), unless explicitly disclosed otherwise.

### Carbon (C): 0.20 - 0.42 %

Carbon is an element added primarily to achieve a desired hardness and strength of a component produced from the steel power. Carbon contributes to hardness and strength both through formation of carbides and through solid solution strengthening. If the content of carbon is too low, the mechanical properties, such as hardness and mechanical strength, will be inferior. Therefore, carbon is present in an amount of at least 0.20 %. Suitably, carbon is present in an amount of equal to or higher than 0.25 %. Preferably, carbon is present in an amount of equal to or higher than 0.30 %.

However, too high amounts of carbon may result in increased residual stresses in the component produced by additive manufacturing. This in turn increases the risk for distortion of the component. Furthermore, too high amounts of carbon may risk leading to a reduction in toughness. Therefore, carbon should not be added in amounts above 0.42 %. Preferably, the carbon content is equal to or less than 0.40 %, or even equal to or less than 0.36 %.

### Silicon (Si): 0.8 - 1.3 %

Silicon contributes to increased hardness through solid solution strengthening. Silicon may also suppress formation of cementite in the material and therefore contributes to achieving the desired microstructure. Furthermore, addition of silicon may also enhance weldability. Since many AM processes melt and weld (fuse) the material on a micron scale, silicon also enhances the material processing in these processes. Therefore, the present composition comprises at least 0.8 % silicon. Suitably, silicon may be present in an amount of at least 0.85 %. Preferably, the silicon content is equal to or higher than 0.90 %.

However, too high contents of silicon may decrease the impact fracture toughness of the material of the produced component. For said reason, silicon should not be added in amounts in excess of 1.3 %. Suitably, silicon is present in an amount of equal to or less than 1.25 %, or even more preferred in an amount of equal to or less than 1.20 %.

### Manganese (Mn): 0.5 - 1.5 %

Manganese may be added in order to increase the hardness. Manganese also stabilizes the austenite phase and delays transformation of austenite during cooling. The present composition comprises at least 0.5% manganese to achieve substantially complete martensite transformation and desired hardness. Such a content of manganese also has the advantage of reducing the risk for formation of other harmful metal sulfides, such as FeS that may otherwise lead to embrittlement. Manganese may suitably be present in an amount of at least 0.60 %. Preferably, the manganese content is equal to or more than 0.65 %.

However, manganese should not be added in excess of 1.5 % as this may result in segregation in the component produced from the steel powder. Such segregations may affect the microstructure and hence the mechanical properties negatively. Furthermore, too high manganese content may result in a relatively large amount of retained austenite. This may in turn lead to tempering embrittlement and dimensional instability of the produced component. Suitably, the manganese content may be limited to equal to or less than 1.20 %. Preferably, manganese is present in an amount of equal to or less than 0.95 %.

### Chromium (Cr): 1.0 - 2.2 %

Chromium is added to the herein described composition e.g., for the purpose of increasing hardenability. Furthermore, chromium contributes to increased hardness of the material of the produced component by forming carbides. In order to achieve a substantially martensitic microstructure in the component produced from the steel powder, the present composition comprises at least 1.0 % chromium. Chromium may suitably be added in an amount of at least 1.2%, or even at least 1.4 %.

However, too high additions of chromium results in a decrease in weldability and therefore has a negative effect on printability. For said reason, the chromium content should not exceed 2.2 %. Suitably, chromium may be present in an amount of equal to or less than 2.0 %. Preferably, chromium may be present in an amount of equal to or less than 1.6 %.

### Nickel (Ni): 0.8 - 2.0 %

Nickel is an element added to the herein described composition for the purpose of increasing hardenability as well as to ensure desired toughness. Therefore, the herein described composition comprises at least 0.8% of nickel. Suitably, nickel may be present in an amount of equal to or higher than 1.0 %. Preferably, nickel is present in an amount equal to or higher than 1.1 %.

Too high amounts of nickel may however increase the amount of retained austenite and should therefore be avoided. Therefore, the herein described composition comprises at most 2.0 % nickel. Suitably, nickel may be present in an amount of equal to or less than 1.5%. Preferably, the composition comprises equal to or less than 1.3 % of nickel.

### Molybdenum (Mo): 1.1 - 3.0 %

Molybdenum is an important element in the present composition. Molybdenum is a strong carbide former and forms carbides that are temperature stable. By adding molybdenum, increased heat softening resistance may be achieved. Furthermore, increasing amounts of molybdenum may promote formation of a cellular structure in the as-built material, which contributes to increased strength of the component produced. Therefore, the present composition comprises at least 1.1 % of molybdenum. Suitably, the composition comprises equal to or more than 1.4 % molybdenum, or even equal to or more than 1.6 % molybdenum.

However, molybdenum should not be added in too high amounts since this may increase the risk for formation of microcracks in the as-built material. Moreover, molybdenum may increase the alloying costs. Therefore, molybdenum should not be present in amounts above 3.0 %. Suitably, molybdenum is present in an amount of equal to or less than 2.6 %. Preferably, molybdenum is present in an amount of equal to or less than 2.4 %.

### Vanadium (V): 0.08 - 0.30 %

Vanadium is a strong carbide former which forms small and well dispersed carbides in the matrix in the as-built component. These small carbides contribute to increased hardness. Therefore, the herein described steel powder comprises at least 0.08 % of vanadium. Suitably, vanadium may be present in an amount of equal to or more than 0.10 %, or even equal to or more than 0.12 %.

However, too high amounts of vanadium may risk negatively affecting the toughness and should therefore be avoided. Therefore, the herein described composition comprises at most 0.30 %. Suitably, vanadium may be present in an amount of equal to or less than 0.25 %. Preferably, vanadium may be present in an amount of equal to or less than 0.20 %.

### Titanium (Ti): optionally up to 0.05 %

Titanium may optionally be added to the present composition, for example for the purpose of increasing strength. Titanium may also be added for the purpose of avoiding or reducing formation of boron nitrides. However, addition of titanium may lead to increased risk for formation of titanium nitride (TiN) and titanium carbide (TiC), which in turn may reduce toughness. Therefore, the titanium content in the present composition is equal to or less than 0.05 %. Suitably, titanium may be present in an amount of equal to or less than 0.03 %. Preferably, titanium is present in an amount of equal to or less than 0.02 %.

Here it should be noted that TiC and TiN nucleates at higher temperatures. The large cooling rates related to some additive manufacturing methods, like L-PFB, make the material cool fast enough through the temperature window where TiC and TiN particles nucleates. Therefore, additions of small amounts of titanium are plausible. Suitably, at least 0.001 % of titanium may be added. Preferably, titanium may be added in an amount of equal to or more than 0.002 %.

### Copper (Cu): optionally up to 0.5 %

Copper is usually considered as an impurity element, e.g., because it may cause cracks during casting of conventionally produced tool and engineering steels. Furthermore, copper may be very difficult to remove from a steel melt once it is present. However, the present steel powder may comprise higher amounts than normally considered to constitute impurity levels of copper. This is particularly advantageous in case the steel powder is produced from scrap where copper may be comprised in the raw material used. More specifically, copper may be allowed in contents up to 0.5 %. It is, however, often desirable to seek to reduce the copper content. Therefore, copper may suitably be present in an amount of equal to or less than 0.3 %. Preferably, copper may be present in an amount of equal to or less than 0.15 %.

### Niobium (Nb): optionally up to 0.06 %

Like vanadium, niobium is a strong carbide former and may contribute to increased hardness and strength. However, niobium carbides are precipitated at higher temperatures and may be coarser than vanadium carbides. Therefore, niobium carbides may be more difficult to dissolve than vanadium carbides once they are formed and may risk growing during the remelting of a previously formed layer when a new layer is fused thereto during printing. Therefore, too high contents of niobium may risk reducing the toughness without further increasing the strength of the material. If present, niobium should not exceed 0.06 %. Suitably, niobium may be present in an amount or equal to or less than 0.040 %. Preferably, niobium is present in an amount of equal to or less than 0.030 %.

If added, niobium may suitably be added in an amount of at least 0.010 % to thereby efficiently contribute to increased hardness and strength.

### Nitrogen (N): optionally up to 0.05 %

Nitrogen is an element that may result from the atomizing medium used during production of the herein described steel powder. Furthermore, nitrogen has the advantage of contributing to strength and hardness of the component produced from the steel powder through solution strengthening and/or formation of small nitrides. Therefore, the herein described steel powder may optionally comprise equal to or more than 0.005 % of nitrogen.

However, too high amounts of nitrogen may lead to formation of unduly large nitrides which could significantly reduce the toughness. Therefore, the herein described steel powder comprises at most 0.05 % of nitrogen. Suitably, nitrogen is present in an amount of equal to or less than 0.03 %, or even equal to or less than 0.02 %.

### Boron (B): optionally up to 0.005 %

If desired, boron may be added for the purpose of increasing hardenability. If so, at least 10 ppm boron should preferably be added. However, at amounts above 50 ppm, boron loses its effect on hardenability and higher amounts are therefore not necessary. Suitably, boron may be present in an amount of equal to or less than 30 ppm. Preferably, boron may be present in an amount of equal to or less than 25 ppm.

### Unavoidable impurities

In the present disclosure, unavoidable impurities are considered to be impurities resulting from the manufacturing process and/or the raw material used.

One example of an unavoidable impurity is phosphorus (P). Phosphorous may have a negative effect on the mechanical properties. Therefore, the phosphorus content is limited to at most 0.02 %. Preferably, the phosphorous content should be limited to equal to or less than 0.01 %.

Another example of an unavoidable impurity is sulfur (S). Sulfur is an unwanted element that in combination with other elements forms sulfides. These sulfides can drastically reduce the toughness of the steel. In some tool steels, higher amounts of sulfur may be allowed, or even added, to increase machinability. However, since additive manufacturing is a near net shaping process, this is not necessary for the present steel powder. In order to reduce the negative effects on the mechanical properties, the content of sulfur is therefore limited to at most 0.01 %. Suitably, the sulfur content may be limited to equal to or less than 0.005 %, or even equal to or less than 0.003 %.

Yet another example of an unavoidable impurity is aluminum (Al). Aluminum may be allowed in contents equal to or less than 0.02 % without negatively affecting the desired properties.

Other examples of possible unavoidable impurities include, but are not limited to, calcium (Ca), cobalt (Co), and oxygen (O).

The total content of unavoidable impurities may advantageously be controlled to be equal to or less than 0.2 %. Preferably, unavoidable impurities may be present in an amount of equal to or less than 0.1 % in total. It should here be noted that the content of copper (which is an element often considered to constitute an impurity) is not considered to be included in the total content of unavoidable impurities.

### Method of production

The above-described steel powder may be produced by atomizing a melt of a steel alloy. Such a steel alloy may for example be produced via refining of crude iron (also known as pig iron) in a basic oxygen furnace (BOF), alternatively melting of for example scrap in an electric arc furnace (EAF), followed by additional alloying to thereby arrive at a steel alloy which, at least after atomization, would result in the desired composition. The additional alloying for arriving at the desired composition may for example be performed in a ladle furnace. Alternatively, such additional alloying may be performed in a furnace used for melting in conjunction with atomization. The steel alloy may suitably be melted in an induction furnace for the purpose of atomization. Preferably, said melting is performed under inert protective gas atmosphere, e.g. argon. The protective gas is important e.g., to limit pick up of oxygen from the atmosphere. When the melt has reached a desired temperature, the molten metal may be transferred to an atomizing nozzle. In general, this is achieved by tilting the induction furnace, or by opening a stopper rod blocking an outlet of the induction furnace.

Atomization is performed by subjecting the melt leaving the atomizing nozzle to an atomization medium. The atomization medium is used to break up the molten stream into fine metal droplets which are thereafter quickly cooled down so as to form metal power particles. Said metal power particles may typically have a size less than 1 mm. Preferably, the atomization parameters may be controlled such that the obtained metal powder particles have a size of less than about 200 µm. The atomization medium may suitably be nitrogen, or a gas mixture comprising nitrogen gas (such as mixtures of nitrogen and argon). It is however also possible to use only argon as atomization medium, although this may be less preferred e.g., from a cost perspective.

It should be noted that, in general, the powder obtained by the atomization process may need to be further processed to be suitable for use in an additive manufacturing process. More specifically, it may be needed to further process the as-atomized powder so as to arrive at a suitable particle size distribution. To obtain desired powder fractions from the as-atomized powder, the powder can be put through a sieving operation or be air classified, or a combination thereof. During sieving, the powder is transferred through a mesh with a defined opening size. Powder particles larger than the opening will stay on top of the mesh and the ones that are smaller will be transferred through. The cut point can be chosen by adjusting the mesh opening size. To gain a target particle size distribution, the material can be directly sieved. Alternatively, powders with two or several particle size intervals can be mixed, if desired.

Different AM processes use powders with different target particle size intervals. For usage in a laser metal deposition process or a directed energy deposition process, a powder particle size between 45-150 µm is suitable. For usage in L-PBF (laser powder bed fusion), a powder particle size of 15-63 µm is suitable, and often a particle size of 15-45 µm is desired. For EBM, a powder particle size of 45-106 µm is suitable, although lower particle sizes (comparable with those of L-PBF) are also plausible.

### Properties

The herein described steel powder has a good flowability irrespectively of if the powder is sieved to a particle size suitable for L-PBF, EBM, LMD or DED. More specifically, the steel powder has a flowability of less than 30s/50g as determined in accordance with ISO 4490:2018. A good flowability of the powder is important as it affects the feeding of the steel powder through the feeding equipment and thereby affects printability. Flowability also affects spreading of the steel powder in AM processes involving powder beds. Moreover, good flowability enhances printability e.g., as it allows the powder to be more closely packed in a powder bed layer, which is subsequently to be melted, which in turn leads to lower risk for porosity in the as-built material.

A component produced by additive manufacturing using the herein described steel powder will typically obtain a microstructure comprising at least 90 vol.-% martensite already in the as-built condition. Furthermore, the microstructure will comprise finely dispersed and nanosized carbides. Moreover, the herein described steel powder allows for obtaining a relative density of at least 99.5 vol.-% in a component produced by means additive manufacturing processes involving melting and fusing of the steel powder, for example L-PBF.

Once printed, the produced component can suitably be used in as-built condition. However, one or more additional heat treatments, such as tempering or quenching and tempering, can be made, if desired. Additional heat treatments lower the levels of residual stress and possible anisotropy in mechanical properties. Furthermore, the amount of retained austenite may be reduced through conversion to martensite when subjecting the as-built component to said one or more additional heat treatments.

By means of the herein described steel powder, it is possible to obtain the following mechanical properties after additive manufacturing already in the as-built condition:
- a yield strength of at least 1100 MPa (typically at least 1200 MPa) as determined in accordance with ISO 6892-1:2019,
- a tensile strength of at least 1500 MPa (typically at least 1550 MPa) as determined in accordance with ISO 6892-1:2019,
- an elongation of at least 10 % (typically at least 13 %) as determined in accordance with ISO 6892-1:2019,
- an impact toughness of at least 30 J (typically at least 35 J) as determined in accordance with ISO 148-1:2016, and
- a hardness of at least 460 HV (typically at least 475 HV) as determined in accordance with ISO 6507-1:2018.

The above mentioned mechanical properties are obtained irrespectively of the direction of measurement relative to the building direction.

The steel powder is easily processed in for example L-PBF and allows for a wide span of parameters to be used during printing, while still achieving a relative density of the component produced higher than 99.8 vol.-% as will be demonstrated below by the experimental results below. Examples of process parameters that may be changed as desired include laser power, laser scanning speed, powder layer thickness and hatching distance. All these parameters together influence the energy input. The broad span of usable parameters indicates that the steel powder according to the present disclosure has a high degree of printability.

### Experimental results

Five different steel powders, having compositions as specified in Table 1, were each produced by atomization of a melt using nitrogen gas as atomizing medium.

**Table 1. Composition of steel powders, in wt.-%**

| **Element** | **P1** | **P2** | **P3** | **P4** | **P5** |
|---|---|---|---|---|---|
| **C** | 0.32 | 0.32 | 0.32 | 0.32 | 0.33 |
| **Si** | 0.96 | 0.99 | 1.02 | 1.00 | 1.02 |
| **Mn** | 0.71 | 0.76 | 0.76 | 0.72 | 0.76 |
| **P** | <0.010 | <0.010 | <0.010 | <0.010 | <0.010 |
| **S** | <0.003 | <0.003 | <0.003 | <0.003 | <0.003 |
| **Cr** | 1.47 | 1.47 | 1.50 | 1.44 | 1.48 |
| **Ni** | 1.25 | 1.17 | 1.19 | 1.17 | 1.20 |
| **Mo** | 2.19 | 1.96 | 2.04 | 2.05 | 2.04 |
| **V** | 0.139 | 0.135 | 0.137 | 0.136 | 0.136 |
| **Ti** | 0.005 | 0.007 | 0.007 | 0.005 | 0.007 |
| **Cu** | 0.026 | 0.026 | 0.027 | 0.025 | 0.026 |
| **Al** | <0.002 | <0.002 | <0.002 | <0.002 | <0.002 |
| **Nb** | 0.017 | 0.016 | 0.017 | 0.015 | 0.018 |
| **N** | 0.02 | 0.02 | 0.02 | 0.02 | 0.02 |
| **B** | 0.0021 | 0.0021 | 0.0022 | 0.0023 | 0.0019 |
| **Fe** | bal. | bal. | bal. | bal. | bal. |

The steel powders were thereafter each sieved to obtain two different powder size distributions, X1 and X2. X1 was targeted to be suitable for L-BPF, and X2 was targeted to be suitable for DED or LMD. Powder size distribution was thereafter determined by dynamic image analysis according to ISO 13322-2:2021. Similar results for the targeted size distributions were obtained for all steel powders P1 to P5. On average, the X1 powders had a particle size distribution of D10 =23 µm, D50 =33 µm and D90 =45 µm. Moreover, the X2 powders had on average a particle size distribution of D10 =55 µm, D50 = 74 µm and D90 =109 µm. D10 represents that the portion of particles with diameters smaller than this value is 10%, D50 represents that the portion of particles with diameters smaller than this value is 50%, and D90 represents that the portion of particles with diameters smaller than this value is 90%.

Moreover, flowability after sieving was tested for the different powders. For this purpose, a weighted mass of 50 g of each steel powder was timed as it flowed through an orifice of a Hall Flowmeter funnel. The tests were performed according to ISO 4490:2018 using two different funnels, both funnels falling within the standard. All steel powders demonstrated a Hall flow well below 30s/50g, irrespectively of the funnel used. This demonstrates that all powders have a good flowability, making them suitable for their respective additive manufacturing process. As may be expected, the X1 powders showed a slightly better flowability than the X2 powders.

For the purpose of investigating properties after additive manufacturing, various bodies were produced as will be described below. It was expected that the different X1 powders, having the compositions P1 to P5 as specified in Table 1, would result in similar properties in the as-built condition. Therefore, the different X1 powders were mixed before printing, to thereby obtain a substantially averaged result of the properties. In other words, printing was performed using a mixture of the X1 powders of P1 to P5.

Printing was performed by selective laser melting, using a SLM 280, according to different sets of process parameters as specified in Table 2. For each powder layer thickness, all bodies were printed in the same process (i.e. at the same time) on a common building plate. In other words, all bodies printed using the process parameters T1-T3 were produced in the same printing process. Likewise, all bodies printed using the process parameters T4-T6 were produced in the same printing process, and all bodies printed using the process parameters T7-T9 were produced in the same printing process.

**Table 2. Process parameters**

| **Process** | **Laser power [W]** | **Scanning speed [mm/s]** | **Hatch distance [mm]** | **Layer thickness [µm]** |
|---|---|---|---|---|
| **T1** | 200 | 800 | 0.12 | 30 |
| **T2** | 200 | 725 | 0.12 | 30 |
| **T3** | 225 | 725 | 0.12 | 30 |
| **T4** | 233 | 674 | 0.12 | 60 |
| **T5** | 316 | 719 | 0.12 | 60 |
| **T6** | 316 | 878 | 0.12 | 60 |
| **T7** | 400 | 800 | 0.10 | 90 |
| **T8** | 325 | 700 | 0.12 | 90 |
| **T9** | 250 | 550 | 0.12 | 90 |

For the purpose of tensile testing, printing was made into bodies having a cylindrical shape with a diameter of 12 mm and a longitudinal extension of 90 mm. Half of the cylindrical bodies were printed with a building direction along the longitudinal axis of the cylinder (i.e. as standing cylinders), and half of the cylindrical bodies were printed with a building direction along the radial direction (i.e. as horizontal cylinders). The cylindrical bodies were after printing machined to the configuration of the test samples. Tensile testing, in the as built condition, was performed according to ISO 6892-1:2019. In all cases, tensile force was applied to the samples in the direction corresponding to the longitudinal axis of the cylinders. Table 3 discloses the average result of five samples (each taken from a respective printed body), together with the standard deviation.

For the purpose of testing impact toughness, rectangular shaped bodies with the dimensions 12x12x70 mm were printed. Half of said rectangular bodies were printed with a building direction corresponding to the longest extension of the rectangular bodies (i.e. as standing bodies), and half of the bodies were printed with a building direction perpendicular to the longest extension (i.e. as lying bodies). The printed bodies were thereafter machined to the configuration of the samples used for testing. Impact toughness (Charpy-V) was tested according to ISO 148-1:2016. In all cases, the impact force was applied in a direction perpendicular to the longest extension of the rectangular bodies. Table 3 discloses the average result of five samples (each taken from a respective body), together with the standard deviation.

**Table 3. Tensile properties and impact toughness in as-built condition**

| **Process** | **Printing direction** | **Yield strength, Rp0.2 [MPa]** | **Tensile strength, Rm [MPa]** | **Elongation, A5 [%]** | **Charpy-V [J]** |
|---|---|---|---|---|---|
| **T1** | **Standing body** | 1215 ± 16 | 1612 ± 22 | 19 ± 1 | 47 ± 3 |
| | **Lying body** | 1391 ± 5 | 1676 ± 14 | 17 ± 1 | 56 ± 2 |
| **T2** | **Standing body** | 1280 ± 18 | 1558 ± 5 | 18 ± 1 | 48 ± 2 |
| | **Lying body** | 1427 ± 11 | 1637 ± 9 | 18 ± 1 | 66 ± 3 |
| **T3** | **Standing body** | 1259 ± 46 | 1546 ± 22 | 17 ± 1 | 51 ± 4 |
| | **Lying body** | 1434 ± 20 | 1659 ± 15 | 18 ± 1 | 58 ± 3 |
| **T4** | **Standing body** | 1254 ± 36 | 1539 ± 28 | 11 ± 2 | 37 ± 5 |
| | **Lying body** | 1354 ± 22 | 1628 ± 19 | 16 ± 0 | 36 ± 1 |
| **T5** | **Standing body** | 1274 ± 5 | 1540 ± 6 | 11 ± 0 | 36 ± 2 |
| | **Lying body** | 1362 ± 18 | 1622 ± 15 | 17± 3 | 41 ± 1 |
| **T6** | **Standing body** | 1203 ± 40 | 1584 ± 21 | 13 ± 2 | 42 ± 1 |
| | **Lying body** | 1313 ± 29 | 1643 ± 4 | 16 ± 1 | 44 ± 1 |

It should here be noted that the bodies produced according to the process parameters of T6-T9 have not yet been subjected to tensile testing or impact toughness testing.

Hardness was tested in accordance with ISO 6507-1:2018 at different, equally spaced, positions along the building direction. Table 4 discloses the average hardness of the different positions, together with the standard deviation.

For the purpose of determining relative density in the as-built condition, the samples were investigated using Light Optical Microscopy (LOM) at 200x magnification. LOM images, taken along the building direction, were stitched together. Porosity was examined by analysis of the stitched images using the software ImageJ. Table 4 discloses the obtained relative density. It should here be noted that relative density is determined based on analysis of two-dimensional images and is thus given in area percentage instead of volume percentage. It is however generally accepted in the art that the area percentage is representative of the volume percentage.

Thereafter, the samples previously used for determining relative density were etched in 2 % Nital, and subsequently examined at 200x and 500x magnification, respectively, in LOM. All samples demonstrated a substantially martensitic microstructure comprising well dispersed small carbides.

**Table 4. Hardness and relative density in as-built condition**

| **Process** | **Hardness [HV5]** | **Relative density [%]** |
|---|---|---|
| **T1** | 488 ± 7 | 99.931 |
| **T2** | 487 ± 8 | 99.977 |
| **T3** | 482 ± 7 | 99.989 |
| **T4** | 485 ± 6 | 99.981 |
| **T5** | 479 ± 5 | 99.996 |
| **T6** | 491 ± 6 | 99.987 |
| **T7** | 482 ± 9 | 99.985 |
| **T8** | 479 ± 7 | 99.984 |
| **T9** | 480 ± 8 | 99.969 |

The experimental results presented above demonstrate that it is possible to produce components of the herein described steel powder through selective laser melting using a large variety of process parameters and still obtain a good balance of properties. In particular, a high tensile strength, a high hardness, and a high relative density may be achieved already in the as-built condition while still maintaining an acceptable impact toughness for many applications. It is foreseen that, if desired, the impact toughness may be somewhat improved through subjecting the as-built component to one or more heat treatments as already described above.

## Claims

1. A steel powder for use in additive manufacturing processes involving melting and fusing of the steel powder, the steel powder having the following composition in percent by weight (wt.-%):
C 0.20 - 0.42,
Si 0.8 - 1.3,
Mn 0.5 - 1.5,
Cr 1.0-2.2,
Ni 0.8 - 2.0,
Mo 1.1-3.0,
V 0.08-0.30,
optionally Ti equal to or less than 0.05,
optionally Cu equal to or less than 0.5,
optionally Nb equal to or less than 0.06,
optionally N equal to or less than 0.05,
optionally B equal to or less than 0.005,
balance Fe and unavoidable impurities;
wherein the unavoidable impurities Al, P, and S are limited to:
Al equal to or less than 0.02,
P equal to or less than 0.02, and
S equal to or less than 0.01.

2. The steel powder according to claim 1, wherein the composition comprises 0.25 - 0.40 wt.-% C; preferably 0.30 - 0.36 wt.-% C.

3. The steel power according to any one of claims 1 or 2, wherein the composition comprises 0.85 - 1.25 wt.-% Si; preferably 0.90 - 1.20 wt.-% Si.

4. The steel powder according to any one of the preceding claims, wherein the composition comprises 0.60 - 1.20 wt.-% Mn; preferably 0.65 - 0.95 wt.-% Mn.

5. The steel powder according to any one of the preceding claims, wherein the composition comprises 1.2 - 2.0 wt.-% Cr; preferably 1.4 - 1.6 wt.-% Cr.

6. The steel powder according to any one of the preceding claims, wherein the composition comprises 1.0 - 1.5 wt.-% Ni; preferably 1.1 - 1.3 wt.-% Ni.

7. The steel powder according to any one of the preceding claims, wherein the composition comprises 1.4 - 2.6 wt.-% Mo; preferably 1.6 - 2.4 wt.-% Mo.

8. The steel powder according to any one of the preceding claims, wherein the composition comprises 0.10 - 0.25 wt.-% V; preferably 0.12 - 0.20 wt.-% V.

9. The steel powder according to any one of the preceding claims, wherein the composition comprises 0.001 - 0.030 wt.-% Ti; preferably 0.002 - 0.020 wt.-% Ti.

10. The steel powder according to any one of the preceding claims, wherein the composition comprises 0.010 - 0.040 wt.-% Nb; preferably 0.010 - 0.030 wt.-% Nb.

11. The steel powder according to any one of the preceding claims, wherein the composition comprises 0.001 - 0.003 wt.-% B.

12. The steel powder according to any one of the preceding claims, wherein the composition comprises equal to or less than 0.03 wt.-% N.

13. The steel powder according to any one of the preceding claims, wherein the composition comprises equal to or less than 0.3 wt.-% Cu; preferably equal to or less than 0.15 wt.-% Cu.

14. Method for producing a component comprising performing an additive manufacturing process using the steel powder according to any one of claims 1 to 13.

15. A steel component produced through additive manufacturing using the steel powder according to any one of claims 1 to 13, wherein the steel component has a tensile strength of at least 1500 MPa, as determined in accordance with ISO 6892-1:2019, and a hardness of at least 460 HV as determined in accordance with ISO 6507-1:2018.

16. Use of the steel powder according to any one of claims 1 to 13 in an additive manufacturing process selected from the group consisting of laser powder bed fusion, electron beam melting, laser metal deposition, directed energy deposition, and selective laser sintering.
